Europäisches Patentamt

European Patent Office

Office européen des brevets

(11) Veröffentlichungsnummer : **0 222 170**
**B1**

(12)  **EUROPÄISCHE PATENTSCHRIFT**

(45) Veröffentlichungstag der Patentschrift :
11.01.89

(51) Int. Cl.⁴ : **F 16 B 12/20**

(21) Anmeldenummer : **86114023.4**

(22) Anmeldetag : **09.10.86**

(54) Beschlag, insbesondere für ein Möbelstück.

(30) Priorität : 09.11.85 DE 3539853

(43) Veröffentlichungstag der Anmeldung :
20.05.87 Patentblatt 87/21

(45) Bekanntmachung des Hinweises auf die Patenterteilung : 11.01.89 Patentblatt 89/02

(84) Benannte Vertragsstaaten :
AT BE ES FR GB GR IT NL SE

(56) Entgegenhaltungen :
AT-B- 352 332
DE-C- 1 753 064
DE-C- 3 009 380

(73) Patentinhaber : **Häfele KG**
**Postfach 160 Freudenstädter Strasse 74**
**D-7270 Nagold (DE)**

(72) Erfinder : **Walz, Rüdiger**
**Eberhardstrasse 19**
**D-7270 Nagold (DE)**

(74) Vertreter : **Schmid, Berthold et al**
**Patentanwälte Dipl.-Ing. B. Schmid Dr. Ing. G. Birn**
**Falbenhennenstrasse 17**
**D-7000 Stuttgart 1 (DE)**

## Beschreibung

Die Erfindung bezieht sich auf einen Beschlag zum Verbinden zweier Bauteile, insbesondere zweier quer zueinander angeordneter Platten oder Wände eines Möbelstücks, mit einem mit dem ersten Bauteil verbindbaren Rastglied und einer mit einer Einsecköffnung hierfür ausgetatteten, mit dem zweiten Bauteil verbindbaren Zug- und Haltevorrichtung, mit einem eine Druckfläche für eine etwa entgegen der Einsteckrichtung weisende Gegenfläche des Verrastglieds aufweisenden Drehglied. Ein derartiger Beschlag ist beispielsweise durch die DE-PS 30 09 380 bekannt geworden. Er dient « zum Verbinden von zwei senkrecht aufeinander stoßenden Möbelteilen ». Beim Zusammenfügen dieser beiden Möbelteile oder all gemeiner zweier Bauteile muß das Drehglied eine vorbestimmte Drehstellung -nachstehend Ausgangsstellung genannteinnehmen. Das Verrastglied sowie die Zug- und Haltevorrichtung können dann einander so zugeordnet werden, daß beim nachfolgenden Drehen des Drehglieds die beiden einander schon weitgehend korrekt zugeordneten Bauteile einander noch stärker angenähert werden, bis sie schließlich fest aneinander anliegen, wodurch dann die erwünschte stabile Verbindung hergestellt ist. Die Druckfläche des Drehglieds wirkt dabei zumindest über einen vorgegebenen Drehwinkel mit der Gegenfläche des Verrastglieds zusammen. Die Exzentrizität der Druckfläche bewirkt beim Drehen in der Schließ-Drehrichtung ein Hineinziehen des von Hand eingesteckten Verrastglieds ins Innere der Zug- und Haltevorrichtung. Die aneinanderliegenden Flächen, also die Druckfläche einerseits und die Gegenfläche andererseits, müssen so gestaltet sein, daß ein gleichmäßiges Hineinziehen über den gesamten Anzugsbereich des Beschlag gewährleistet ist. Die Verbindung kann durch Drehen des Drehglieds in Gegenrichtung wieder gelöst werden. Ein selbständiges Lösen wird beispielsweise durch entsprechende Verspannung bzw. Selbsthemmung verhindert. Bei bestimmungsgemäßer Montage der beiden Teile dieses Beschlags beträgt der Arbeits-Drehwinkel des Drehglieds weniger als eine Umdrehung.

Der bekannte Beschlag zeichnet sich durch eine einfache Konstruktion und robuste Baumweise aus. Andererseits erfordert aber bereits ein provisorisches Zusammenfügen der beiden Bauteile bzw. Mobelteile das Drehen des Drehglieds um einen kleinen Drehwinkel, was nur mit Hilfe eines entsprechenden Betätigungselements, beispielsweise eines passenden Schlüssels, Schraubendrehers od. dgl. möglich ist. Bei der Montage solcher Beschläge muß man immer mit gewissen Ungenauigkeiten rechnen. Deshalb ist man an sich bestrebt, die verschiedenen bei einem Möbelstück verwendeten Beschläge der in Frage stehenden Art zunächst noch nicht festzuziehen, sondern lediglich das Drehglied und das Verrastglied soweit in Eingriff zu bringen, daß ein selbsttätiges Lösen nicht mehr ohne weiteres möglich ist. Erst wenn bei allen Beschlägen die Beschlagteile derart in Eingriff gebracht sind, wird ein Beschlag nach dem anderen nochmals betätigt, um die Bauteile zusammenzuziehen und damit dem Möbelstück seine endgültige Form und Stabilität zu verleihen.

Das provisorische Zusammenfügen der einzelnen Bauteile erfordert, wie gesagt, die Betätigung des Drehglieds mit Hilfe eines Schlüssels od. dgl. Zugleich sollte man aber die beiden Bauteile in richtiger Zuordnung zueinander halten. Dies ist für eine Person allein schwierig und beim Zusammenbau eines Möbelstücks aus mehreren Bauteilen mitunter gar nicht zu bewältigen, vielmehr ist dann die Hinzuziehung eines Helfers unvermeidlich.

Die Aufgabe der Erfindung wird nun darin gesehen, einen Beschlag der eingangs genannten Art so weiterzubilden, daß mit ihm das Zusammenfügen der beiden Bauteile einfacher und rascher zu bewerkstelligen ist. Insbesondere soll dies den Zusammenbau eines aus mehreren Bauteilen bestehenden Gegenstands, beispielsweise eines Möbelstücks, erleichtern und beschleunigen.

Zur Lösung dieser Aufgabe wird erfindungsgemäß vorgeschlagen, daß der Beschlag gemäß dem Oberbegriff des Anspruchs 1 entsprechend dem kennzeichnenden Teil dieses Anspruchs ausgebildet ist. In bekannter Weise wird jedes der beiden mit Hilfe dieses Beschlags zu verbindenen Bauteile mit einer der « Beschlaghälften », nämlich dem Verrastglied einerseits und der Zug- und Haltevorrichtung andererseits, fest verbunden. Daraufhin steckt man das Verrastglied unter Annäherung seines Bauteils an dasjenige mit der Zug- und Haltevorrichtung in die Einstecköffnung der letzteren ein. Wenn eine vorbestimmte Einstecktiefe erreicht ist, trifft das Verrastglied auf der Keilfläche des Drehglieds auf. Verlauf und Anordnung dieser Keilfläche sind so zu wählen, daß die vom Verrastglied auf die Keilfläche ausgeübte Druckkraft beim Einstecken zu einem Wegdrehen der Keilfläche in vorbestimmter Drehrichtung des Drehglieds führt. Das die Keilfläche aufweisende Teilstück des Drehglieds bewegt sich dabei immer mehr aus dem Verschiebe-Bewegungsbereich des Verrastglieds hinaus, bis es diesen schließlich ganz verlassen hat. Zugleich mit dem Herausdrehen der Keilfläche aus dem Verschiebereich schwenkt in diesen der Anfang der Druckfläche hinein. Dieser Anfang der Druckfläche ist gegenüber der Keilfläche in Verschieberichtung des Verrastglieds derart versetzt, daß er die beim Wegdrehen der Keilfläche seitlich am Anfang der Druckfläche vorbeibewegte Gegenfläche des Verrastglieds hintergreifen kann. Damit liegt dann der Anfang der Druckfläche in Einschieberichtung des Verrastglieds gesehen vor dessen Gengenfläche. Das bedeutet ein Einriegeln des Verrastglieds in der Einsteckaufnahme der Zug- und Haltevorrichtung. Das Verrastglied kann deshalb ohne vorheriges Zurückdrehen des Drehglieds nicht mehr aus der Einsteckaufnahme herausgezogen werden. Die beide Bauteile sind also miteinander gekuppelt, ohne jedoch fest einander anzuliegen. Das feste Zusammenpressen der beiden Bauteile erreicht man erst durch Weiterdrehen des Drehglieds im zuvor erfolgten Drehsinne. Dabei drückt dann die als stirnseitige Wendelfläche ausgebildete Druckfläche ständig gegen die Gegenfläche des Verrastglieds. Aufgrund der Wendelsteigung drückt sie aber das Verrastglied immer tiefer in die Einsteckaufnahme hinein, bis schließlich das mit dem Verrastglied verbundene Bauteil fest an dasjenige mit der Zug- und Haltevorrichtung angepreßt ist.

Die geschilderte lockere, aber ohne eine besondere Betätigung des Drehglieds, beispielsweise mit Hilfe eines Schlüssels oder Schraubendrehers, nicht mehr lösbare Verbindung der beiden Bauteile, erreicht man durch einfaches Zusammenstecken der beiden Beschlaghälften automatisch, d. h. ohne direktes Einwirken auf das Drehglied mit einem Schlüssel od. dgl. Es ist leicht einzusehen, daß dieser Beschlag die gestellte Aufgabe einwandfrei löst und die Verbindung der beiden Bauteile rasch sowie auf einfache Weise vornehmen kann. Wird beispielsweise ein Möbelstück aus mehreren Bauteilen aufgebaut, so kann man in der geschilderten Weise zunächst alle Bauteile ohne Zuhilfenahme eines Werkzeugs zusammen stecken. Die Verrastung der Beschlage gewährleistet bereits einen sicheren, losen Zusammenhalt aller Bauteile des Möbels od. dgl. Die notwendige Stabilität ist aber erst dann hergestellt, wenn sämtliche Drehglieder im spannenden Sinne gedreht wurden. Andererseits ermöglicht aber das automatische « provisorische Zusammenstecken » auf einfache Weise auch dann eine Montage, wenn die Toleranzen bei der Montage der einzelnen Beschläge, beispielsweise beim Abstand zweier Verrastglieder, ungünstig ausgefallen sind. In jedem Beschlag ist nämlich noch so viel « Luft », daß selbst bei einer gewissen Toleranzüberschreitung das Zusammenstecken immer noch möglich ist. Wenn aber alle Beschläge miteinander verrastet sind, so bereitet das nachfolgende Drehen aller Drehglieder keine Probleme mehr.

Form und Größe des in Einsteckrichtung des vorderen Verrastgliedendes sowie des die Keilfläche aufweisenden Teilstücks und ihre gegenseitige Zuordnung, insbesondere aber die Anordnung des Teilstücks am Drehglied, sind so zu wählen, daß die Einsteckbewegung des Verrastglieds stets zu einer Drehbewegung des Drehglieds führt. Um ein kontinuierliches Drehen des Drehglieds zu gewährleisten, muß die Keilfläche in Drehrichtung gegen das Innere der Einsteckaufnahme hin abfallen. Gegebenenfalls kann auch ein Abfallen in etwa radialer Richtung des Drehglieds zweckmäßig oder auch notwendig sein. In Drehrichtung gesehen muß die Keilfläche bzw. das sie aufweisende Teilstück so dimensioniert und angeordnet sein, daß es den Verschiebebereich

für das innere Verrastgliedende beim Niederdrücken durch die Druckfläche in ausreichendem Maße freigibt. Entsprechendes gilt auch für das Lösen des Beschlags. Hier muß gewährleistet sein, daß beim Rückdrehen des Drehglieds die Keilfläche wieder unter das innere Ende des Verrastglieds treten kann. Dies wird insbesondere durch die Anbringung einer das Drehglied nach außen hin belastenden Druckfeder gewährleistet, die auch beim Spannen gegebenenfalls nützlich sein kann. Aus verschiedenen Gründen kann es zweckmäßig sein, wenn man das die Keilfläche aufweisende Teilstück des Drehglieds z. B. in Drehrichtung kleiner dimensioniert als das innere Verrastgliedende. Es kann sich auch als vorteilhaft erweisen, wenn man dieses Teilstück nicht symmetrisch zu einer Radialebene des Drehglieds anordnet. Des weiteren ist es durchaus möglich und zweckmäßig, wenn der Anfang der Druckfläche die Gegenfläche zunächst mit geringem Abstand übergreift, während das innere Ende des Verrastglieds an der Keilfläche aufliegt. Dies erhöht sogar die Relativbeweglichkeit der Zug- und Haltevorrichtung und des Verrastglieds, ohne deshalb ein ungewünschtes Entkuppeln der beiden Beschlaghälften fürchten zu müssen.

In Weiterbildung der Erfindung wird vorgeschlagen, daß sich die Keilfläche an einem quer zur Drehachse des Drehglieds vorstehenden Ansatz des Drehglieds befind. Weil der Anfang der Druckfläche der Einsteköffnung näher ist als die Keilfläche und sich gewissermaßen zwischen beiden das mit der Keilfläche einerseits und der Druckfläche des Drehglieds andererseits zusammenwirkende freie Verrastgliedende befindet, ordnet man den Ansatz des Drehglieds vorzugsweise an dessen innerem Ende an. In Drehrichtung gesehen ist die Länge der Keilfläche so zu bemessen, daß die Druckfläche die Gegenfläche genügend weit übergreift, wenn die Keilfläche aus dem Bewegungsbereich des Verrastglieds ganz ausgetreten ist.

Eine weitere Ausgestaltung der Erfindung besteht darin, daß das Drehglied im wesentlichen eine kreiszylindrische Gestalt mit etwa parallel zur Längsachse abgetrennten, im Querschnitt kreisabschnittförmigem Teilstück sitzt, wobei die eine Zylinder-Stirnfläche senkrecht zur Längsachse verläuft und die andere Zylinder-Stirnfläche, zumindest in ihrem Außenbereich, als Wendelfläche gestaltet ist, welche die Druckfläche bildet. Dabei fällt die geometrische Achse der Wendelfläche vorzugsweise mit derjenigen des Drehglieds zusammen. Der Außenumfang des Drehglieds ist zumindest im Bereich der wendelförmigen Druckfläche durch eine Zylinderfläche mit zunehmender Höhe und eine parallel zur Achse verlaufende ebenen Fläche gebildet. Demnach erstreckt sich die Wendelfläche jeweils vom einen Seitenbereich der ebenen Fläche des Drehglieds bis zum anderen Seitenbereich.

Eine bevorzugte Ausführungsform der Erfindung sieht vor, daß dem Ende der wendelförmigen Druckfläche der Ansatz mit der Keilfläche zugeordnet ist. Weil diesem in der Ausgangsstellung inneren Ende der Wendelfläche beim Zusammenziehen der beiden Bauteile aus Sicherheitsgründen kaum Bedeutung zukommt, spielt es keine wesentliche Rolle, wie dieses innere Ende und die Gegenfläche geometrisch gesehen einander genau zugeordnet sind. Es ist ohne weiteres denkbar, daß in Einsteckrichtung gesehen das innere Ende der Druckfläche noch etwas weiter innen liegt als die Keilfläche bzw. deren zunächst vom Verrastglied getroffenes oberes Ende.

Eine weitere Variante der Erfindung kennzeichnet sich dadurch, daß der Ansatz eine etwa dreieckförmige Gestalt besitzt, wobei eine Dreieckflanke zugleich eine Teilfläche des kreiszylindrischen Mantels ist. Der Ansatz ist also an einem der seitlichen Ränder der ebenen Mantelfläche plaziert. Gegenüber einer senkrecht zur ebenen Mantelfläche durch die Drehachse gelegten Ebene ist der Ansatz seitlich versetzt. Beim Niederdrücken mit einer stirnseitigen Kante oder Fläche des Verrastglieds entsteht somit das notwendige Drehmoment für das automatische Ankuppeln der Zug- und Haltevorrichtung mit dem Verrastglied beim Einstecken des letzteren.

Weitere Ausgestaltungen und Vorteile des erfindungsgemäßen Beschlags ergeben sich aus den Ansprüchen und der nachfolgenden Beschreibung eines Ausführungsbeispiels.

Die Zeichnung zeigt ein Ausführungsbeispiel der Erfindung. Hierbei stellen dar:

Figur 1 bis 3 Drei verschiedene Phasen beim Verbinden zweier plattenförmiger Bauteile mit dem erfindungsgemäßen Beschlag,

Fig. 4 bis 6 drei entsprechende Phasen beim Lösen der Verbindung,

Fig. 7 eine Draufsicht auf das Drehglied des Beschlags in vergrößertem Maßstab,

Fig. 8 eine Unteransicht des Drehglieds.

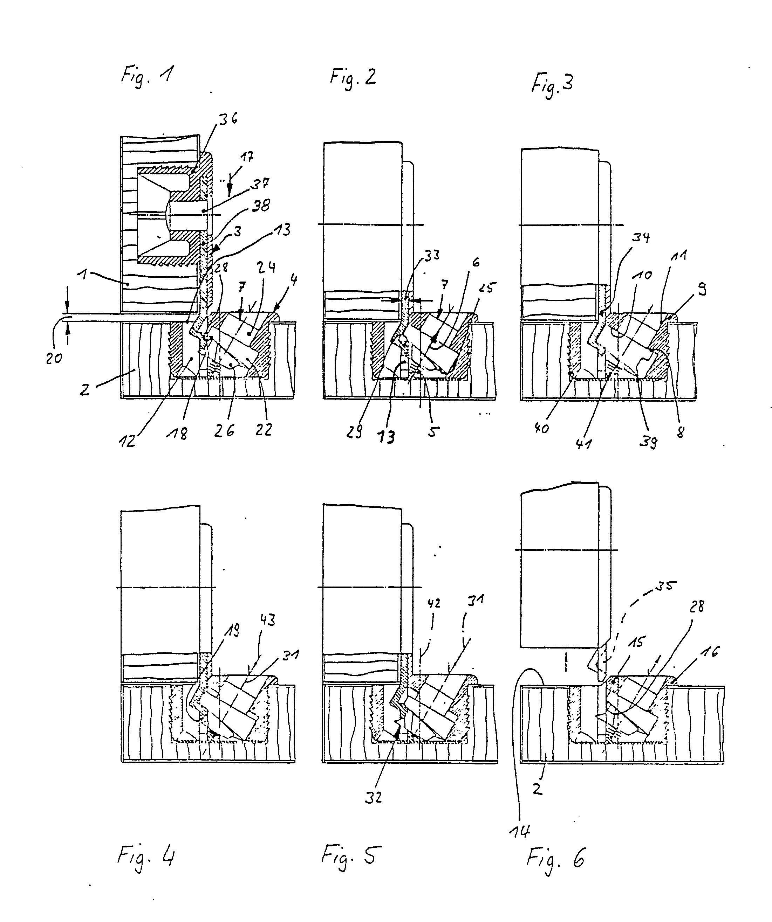

Der Beschlag dient zum Verbinden zweier, insbesondere plattenförmiger Bauteile 1 und 2, deren Ebenen beim Ausführungsbeispiel einen rechten Winkel miteinander einschließen. Die Verbindung ist, wie die Figuren 4 bis 6 ausweisen, jederzeit wieder lösbar. Wesentliche Bestandteile des Beschlags sind ein beispielsweise mit dem Bauteil 1 verbindbares Verrastglied 3 und eine in diesem Falle mit dem Bauteil 2 zu verbindende Zug- und Haltevorrichtung 4, mit deren Hilfe man die in einer relativen Zuordnung gemäß Fig. 2 befindlichen Bauteile zusammenziehen und in der Endlage nach Fig. 3 fest zusammenhalten kann. Die Zug- und Haltevorrichtung 4 besitzt ein mittels einer Belastungsfeder 5 im Sinne des Pfeils 6 federbelastetes Drehglied 7. Mittels einer Schulter 8 stützt es sich an einem inneren Absatz 10 eines Beschlagkörpers 9 ab, der durch eine absatzweise Reduzierung der Bohrung 11 entstanden ist.

Der vorzugsweise als Einbohrzapfen ausgebildete Beschlagkörper 9 besitzt eine Einsteckaufnahme 12, deren Einsteköffnung 13, vorzugsweise bündig, mit der Oberseite 14 des Bauteils 2 verläuft. Man erreicht dies dadurch, daß man den Topfboden 15, welcher in bevorzugter Weise den Topfmantel des topfbodenförmigen Beschlagskörpers 8 in radialer Richtung etwas überragt, kreisabschnittförmig entfernt bzw. weggelassen hat. Der überstehende Rand 16 des Topfbodens bzw. des Beschlagkörpers liegt auf der Oberseite 14 des Bauteils 2 auf (Fig. 6).

In die Einsteköffnung 13 steckt man das in Einsteckrichtung 17 vordere oder freie Ende des Verrastglieds 3 ein. Weil sich in seinem Bewegungsbereich eine Keilfläche 18 des Drehglieds 7 befindet, ist die Einsteckbewegung beendet, wenn die in Einsteckrichtung vordere Kante 19 des Verrastglieds 3 auf diese Keilfläche 18 stößt. Die beiden Bauteile 1 und 2 haben dabei noch einen gegenseitigen Abstand 20 (Fig. 1). Durch das Eindrücken des Bauteils 1 in Einsteckrichtung 17 und das Zusammenwirken der vorderen Kante 19 des Verrastglieds 3 mit der Keilfläche 18 des Drehglieds 7 entsteht an letzterem ein Drehmoment in Pfeilrichtung 21.

Das Drehglied 7 besitzt einen kreizylindrischen Außenmantel 22, der sich jedoch nicht über volle 360° erstreckt, sondern teilweise als ebene Mantelfläche 23 ausgebildet ist. Zur Bildung eines kreizylindrischen Lagerzapfens 24 ist der Durchmesser des Drehglieds 7 absatzweise reduziert. Dadurch entsteht die im Sinne des Pfeils 6 nach oben weisende Schulter 8 und eine in die Gegenrichtung weisende Schulter, welche jedoch nicht die Form eines Kreisrings oder Kreisringteils aufweist, sondern als stirnseitige Wendelfläche 25 geformt ist. Innen ist sie durch einen kegelstumpfförmigen Zapfen 26 begrenzt, der eine zentrische Bohrung zur Aufnahme des einen Endes der Feder 5 aufweist.

Weil sich der Mantel 22 nicht über volle 360° erstreckt, ist auch der von der stirnseitigen Wendelfläche 25 erfaßte Winkel kleiner als 360°, beispielsweise etwa 270°. Er kann aber ohne weiteres auch etwas kleiner oder größer sein.

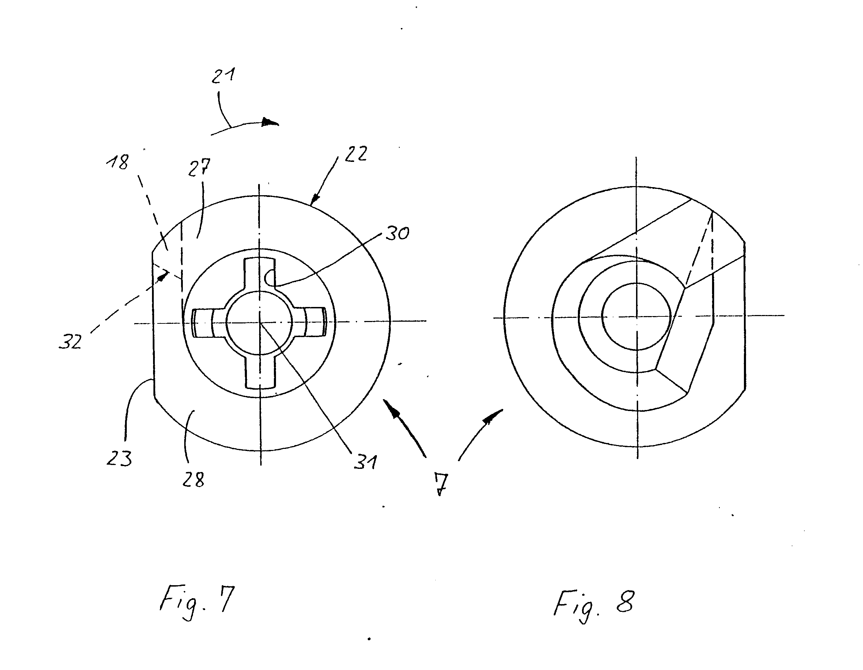

Fig. 7 entnimmt man, daß die Keilfläche 18 dem Ende 27 der stirnseitigen Wendelfläche 25 zugeordnet ist, wenn 28 den Anfang der Wendelfläche bezeichnet. Aus Fig. 1 der Zeichnung ergibt sich, daß der Anfang 28 der stirnseitigen Wendelfläche 25 genau seitlich (rechts) des Verschiebereichs des Verrastglieds 3 steht, wenn die Keilfläche 18 maximal in den Verschiebereich hineinragt. Wenn man nun mit Hilfe des Verrastglieds 3 bzw. seiner vorderen Kante 19 das Drehglied 7 in Pfeilrichtung 21 dreht, so entfernt sich die Keilfläche 18 immer weiter aus dem Verschiebereich des Verrastglieds 3. In gleichem Maße tritt aber die stirnseitige Wendelfläche 25 in den Verschiebereich ein.

Am in Einsteckrichtung 17 vorderen Ende des Verrastglieds 3 ist eine Gegenfläche 29 angeformt. Sie befindet sich beim Drehem des Drehglieds 7 in Einsteckrichtung 17 gesehen hinter dem hereingeschwenkten Anfang 28 der Wendelfläche 25, weswegen der Wendelflächenanfang 28 diese Gegenfläche 29 übergreifen kann. Letztere verläuft im übrigen hinsichtlich ihrer Neigung und Schrägstellung etwa gleich wie die anliegende Wendelfläche. Wenn die Keilfläche 18 vollständig aus dem Bewegungsbereich des Verrastglieds 3 ausgetreten ist oder vor einer sich innen an die vordere Kante 19 des Verrastglieds 3 anschließende Fase steht (Fig. 2), liegt das Bauteil 1 am Bauteil 2 an. Sofern der Anfang 28 der Wendelfläche 25 auf der Gegenfläche 29 zu diesem Zeitpunkt noch nicht aufliegt, was in bevorzugter Weise der Fall ist (Fig. 2), so erreicht man durch Weiterdrehen des Drehglieds 7 in Pfeilrichtung 21, beispielsweise nach einer Viertel- und Halbdrehung des Drehglieds 7 schließlich die in Fig. 3 gezeigte Stellung. Dabei drückt dann die Wendelfläche 25 mit ihrem mittleren oder Endbereich kräftig auf die Gegenfläche 29 und man erhält auf diese Weise rüttelfeste Verbindung der Bauteile 1 und 2. Das Drehen des Drehglieds 7 erfolgt mit Hilfe eines Schlüssels oder Schraubendrehers, den man in eine entsprechende Aufnahme am äußeren stirnseitigen Ende des Lagerzapfens 24 einsteckt, und der beispielsweise die Form eines Kreuzschlitzes haben kann.

Die Keilfläche 18 befindet sich an einem quer zur Drehachse 31 des Drehglieds 7 vorstehenden Ansatz 32 des Drehglieds 7. Weil die Drehachse 31 des Drehglieds 7 beim Ausführungsbeispiel leicht geneigt zur Einsteckrichtung 17 des Verrastglieds 3 verläuft, steht der Ansatz 32 über die ebene Mantelfläche 23 des Drehglieds 7 nicht vor. Es ist trotzdem möglich, daß in der Ausgangsstellung gemäß Fig. 1 das vordere Ende des Verrastglieds 3 ungehindert am Anfang 28 der stirnseitigen Wendelfläche vorbeibewegt werden kann und sich in seinem Bewegungsbereich der Ansatz 32 mit der Keilfläche befindet. Letztere ist so geformt und insbesondere in Drehrichtung abfallend, daß die Druckkraft in Pfeilrichtung 17 zur Drehbewegung im Sinne des Pfeils 21 führt. Wenn die Drehachse 31 parallel oder nahezu parallel zur Einsteckrichtung 17 verlaufen würde, so müßte der Ansatz 32 die ebene Mantelfläche 23 entsprechend weit überragen. Andererseits ermöglicht aber die leichte Schrägstellung des Drehglieds 7 eine besonders einfache und behinderungsfreie Betätigung des Drehglieds mit Hilfe eines Drehwerkzeugs.

Die Einstecköffnung 13 des Beschlagkörpers 9 hat die Form eines Kreisabschnitts, wobei allerdings die Ecken am Übergang vom Kreisbogen zur Sehne nicht spitzwinklig verlaufen, sondern als Rechtecknuten ausgebildet sind. Die Nutbreite entspricht der Dicke 33 des Einsteckendes 34 des Verrastglieds 3 und ihr gegenseitiger Abstand entspricht etwa der Breite dieses Einsteckendes jeweils senkrecht zur Bildebene gemessen (Fig. 2). Das Einsteckende 34 hat demnach die Gestalt einer flachen Zunge mit einer sickenartigen Vertiefung 35 zur Bildung der Gegenfläche 29. Die vordere Kante 19 des Einsteckendes 34 verläuft vorzugsweise senkrecht zur Bildebene und zur Einsteckrichtung 17.

Das Rastglied 3 besitzt einen Einbohrzapfen 36, der insbesondere die gleiche Form und Größe hat wie derjenige der Zug- und Haltevorrichtung 4 und in bekannter Weise mit umlaufenden, im Querschnitt sägezahnartigen Rillen versehen ist. Daran ist beispielsweise mit Hilfe des Niets 37 ein plattenförmiger Teil befestigt, dessen vom Einbohrzapfen abgewandtes Ende die erwähnte sickenartige Vertiefung 35 aufweist. Der plattenförmige Teil 38 kann in eine Tasche des Einbohrzapfens eingesteckt sein. Andererseits ist es aber durchaus möglich, das Verrastglied 3 insgesamt einstückig zu fertigen.

Der Beschlagkörper 9 hat, wie bereits erläutert, die Gestalt eines Topfes. Auf den dem Grund einer Sackbohrung 40 des Bauteils 2 zugeordneten Topfrand ist ein Deckel 39, vorzugsweise aus Kunststoff, aufgesetzt. An der Deckelinnenfläche befindet sich eine Leiste 41, deren seitliche Enden in die erwähnten seitlichen Nuten der Einstecköffnung 13 klemmend eingreifen. Auf diese Weise wird der Deckel 39 am Beschlagkörper 9 gehalten. Zugleich dient aber die Leiste 41 zur Abstützung des in der Zeichnung unteren Endes der Belastungsfeder 5. In Fig. 5 sind die geometrischen Achsen 31 des Drehglieds 7 und 42 des Beschlagkörpers 9 eingezeichnet. Man erkennt, daß sie beim Ausführungsbeispiel einen Winkel von ca. 30° einschließen.

Die Figuren 1 bis 3 verdeutlichen, wie gesagt, das Schließen des Beschlags, wobei in Fig. 1 eine schon weitgehend richtige Zuordnung der Bauteile 1 und 2 erreicht ist. In Fig. 2 liegen die Bauteile 1 und 2 bereits aneinander an, jedoch sind sie noch nicht zusammengepreßt. Andererseits ist aber ein nennenswertes Abheben des Bauteils 1 vom Bauteil 2 entgegen dem Pfeil 17 nicht mehr möglich, weil aufgrund der selbsttätigen Verriegelung mit Hilfe der stirnseitigen Wendelfläche 25 oder Druckfläche und der entgegengesetzt weisenden Gegenfläche 29 das Einsteckende 34 des Verrastglieds 3 nicht mehr aus der Einstecköffnung 13 herausgezogen werden kann. Letzteres wäre nur möglich, wenn man zuvor mit Hilfe eines Werkzeugs das Drehglied entgegen dem Pfeil 21 dreht. Diese lose aber, wie gesagt, nicht mehr ohne weiteres zu lösende Verbindung der beiden Bauteile 1 und 2 gemäß Fig. 2, ermöglicht ein Möbelstück aus mehreren plattenförmigen Bauteilen zunächst ohne Zuhilfenahme eines Werkzeugs zusammenzustecken. Hernach wird dann durch Drehen aller Drehglieder ein Beschlag nach dem anderen festgezogen.

Fig. 4 bis 6 zeigen das Lösen der Bauteile 1 und 2 mit Hilfe eines nicht eingezeichneten Drehwerkzeugs für das Drehglied 7. Ausgehend von der in Fig. 3 gezeigten Drehstellung des Drehglieds 7 erfolgt zunächst ein Rückdrehen des Drehglieds um etwa eine halbe Umdrehung. Gleichzeitig wird das Drehglied aber in Pfeilrichtung 43 gegen die Kraft der Belastungsfeder 5 eingedrückt. Nunmehr ist der Ansatz 32 mit der Keilfläche 18 bereits wieder etwas unter die vordere Kante 19 des Verrastglieds 3 getreten. Die volle Dreh-Ausgangsstellung gemäß Fig. 1 bekommt man durch Weiterdrehen des Drehglieds 7 entgegen dem Pfeil 21 unter Beibehaltung der Druckkraft in Pfeilrichtung 43. Nunmehr ist die in Fig. 5 gezeigte Stellung erreicht. Dabei ist der Anfang 28 der Druckfläche 25 bzw. stirnseitigen Wendelfläche an der Einstecköffnung 13 angekommen. Der Drehwinkel der beiden Stellungen gemäß Figuren 4 und 5, beträgt gegenüber der Ausgangsstellung etwa 40°. Gibt man nunmehr das Drehglied frei, so drückt es die Belastungsfeder 5 entgegen dem Pfeil 43 nach außen. Dadurch gelangt dann der zuvor noch in den Bewegungsbereich des Verrastglieds 3 ragende Anfang der stirnseitigen Wendelfläche 25 wieder seitlich dieses Bewegungsbereichs, so daß die sickenartige Vertiefung 35 und damit das Verrastglied mitsamt des Bauteils 1 freikommen.

Der Drehwinkel zwischen den Stellungen deren Figuren 1 und 2 beträgt vorzugsweise auch etwa 40°, während zwischen den Figuren 2 und 3 ein Drehwinkel des Drehglieds 7 um weitere etwa 170° oder 180° liegt.

**Patentansprüche**

1. Beschlag zum Verbinden zweier Bauteile (1, 2), insbesondere zweier quer zueinander angeordneter Platten oder Wände eines Möbelstücks, mit einem mit dem ersten Bauteil (1) verbindbaren Verrastglied (3) und einer mit einer Einstecköffnung (13) hierfür ausgestatteten, mit dem zweiten Bauteil verbindbaren Zug- und Haltevorrichtung (4), mit einem eine Druckfläche (25) für eine etwa entgegen der Einsteckrichtung (17) weisende Gegenfläche (29) des Verrastglieds (3) aufweisenden Drehglied (7), dadurch gekennzeichnet, daß das Drehglied (7) etwa entgegengesetzt zur Einsteckrichtung (17) des Verrastglieds (3) federbelastet ist und eine in Einsteckrichtung (17) gesehen im Abstand hinter dem Anfang (28) der Druckfläche (25) angeordnete, in Umfangsrichtung verlaufende Keilfläche (18) aufweist, die in der Ausgangsstellung in den Verschiebebereich des Verrastglieds (3) hineinragt und diesen nach einem vorgegebenen in Schließrichtung (21) des Drehglieds verlaufenden Drehwinkel verläßt und daß die Druckfläche (25) des Drehglieds (7) eine stirnseitige Wendelfläche ist, die entgegen der Kraftrichtung (6) der Federbelastung weist und sich in der Ausgsstellung außerhalb des Verschiebebereichs des Verrastglieds (3) befindet und spätestens beim Austritt der Keilfläche (18) aus dem Verschiebereich des Verrastglieds (3) dessen Gegenfläche (29) hintergreift.

2. Beschlag nach Anspruch 1, dadurch gekennzeichnet, daß sich die Keilfläche (18) an einem quer zur Drehachse (31) des Drehglieds (7) vorstehenden Ansatz (32) des Drehglieds (7) befindet.

3. Beschlag nach Anspruch 2, dadurch gekennzeichnet, daß das Drehglied (7) im wesentlichen eine kreiszylindrische Gestalt mit etwa parallel zu seiner Längsachse (31) abgetrenntem, im Querschnitt kreisabschittförmigem Teilstück besitzt, wobei die eine Zylinder-Stirnfläche (8) senkrecht zur Längsachse verläuft und die andere Zylinder-Stirnfläche, zumindest in ihrem Außenbereich, als Wendelfläche (25) gestaltet ist, welche die Druckfläche bildet.

4. Beschlag nach Anspruch 3, dadurch gekennzeichnet, daß dem Ende (27) der wendelförmigen Druckfläche (25) der Ansatz (32) mit der Keilfläche (18) zugeordnet ist.

5. Beschlag nach Anspruch 4, dadurch gekennzeichnet, daß der Ansatz (32) eine etwa dreieckförmige Gestalt besitzt, wobei eine Dreieckflanke zugleich eine Teilfläche des kreiszylindrischen Mantels (22) des Drehglieds ist.

6. Beschlag nach wenigstens einem der vorhergehenden Ansprüche, gekennzeichnet durch eine zentrische Sackbohrung des Drehglieds (7), an deren innerem Ende sich das eine Ende einer als Schraubendruckfeder ausgebildeten Belastungsfeder (5) abstützt.

7. Beschlag nach Anspruch 6, gekennzeichnet durch einen zapfenförmigen Betätigungsansatz (24) des Drehglieds (7) mit einer Aufnahme (30) für ein Drehwerkzeug, der in einer Lagerbohrung eines Beschlagkörpers (9) der Zug- und Haltevorrichtung (4) drehbar ist.

8. Beschlag nach Anspruch 7, dadurch gekennzeichnet, daß der Beschlagkörper (9) der Zug- und Haltevorrichtung (4) eine im wesentlichen topfförmige Gestalt mit insbesondere radial überstehendem Topfboden (15) aufweist, wobei der Topfboden zur Bildung der Einstecköffnung (13) für das Verrastglied (3) teilweise fehlt.

9. Beschlag nach Anspruch 8, dadurch gekennzeichnet, daß die Einstecköffnung (13) etwa die Gestalt eines Kreisabschnitts mit seitlichen Nuten an der geraden Öffnungsbegrenzung aufweist und zumindest das Einsteckende (34) des Verrastglieds als flache Zunge ausgebildet ist.

10. Beschlag nach Anspruch 9, dadurch gekennzeichnet, daß die Gegenfläche (29) des Verrastglieds (3) Teil einer sickenartigen Vertiefung (35) des Einsteckendes (34) ist.

11. Beschlag nach Anspruch 10, dadurch gekennzeichnet, daß die Gegenfläche (29) geneigt zur Ebene des Einsteckendes (34) und geneigt zur freien stirnseitigen Vorderkante (19) des letzteren verläuft, die etwa senkrecht zur Einsteckrichtung (17) steht.

12. Beschlag nach wenigstens einem der Ansprüche 9 bis 11, dadurch gekennzeichnet, daß das Verrastglied (3) im wesentlichen aus einem Einbohrzapfen (36) und einem senkrecht zu dessen Längsachse angeordneten plattenförmigen Teil (38) besteht.

13. Beschlag nach wenigstens einem der Ansprüche 9 bis 12, dadurch gekennzeichnet, daß sich das vom Drehglied (7) abgewandte andere Ende der Belastungsfeder (5) an einem Deckel (39) des Beschlagkörpers (9) der Zug- und Haltevorrichtung abstützt, der am Topfrand befestigt ist.

14. Beschlag nach Anspruch 13, dadurch gekennzeichnet, daß der insbesondere aus Kunststoff gefertigte Deckel (39) klemmend oder rastend am Beschlagkörper (9) gehalten ist.

15. Beschlag nach Anspruch 14, dadurch gekennzeichnet, daß der Deckel (39) mit einer Leiste (41) oder zwei im Abstand voneinander befindlichen Ansätzen in den seitlichen Nuten der Einstecköffnung (13) gehalten ist.

16. Beschlag nach Anspruch 15, dadurch gekennzeichnet, daß die geometrische Achse (31) des Drehglieds (7) geneigt zu derjenigen des Beschlagkörpers (9) verläuft und sich das andere Ende der Belastungsfeder (5) an der Leiste (41) des Deckels (39) abstützt.

17. Beschlag nach wenigstens einem der vorhergehenden Ansprüche, dadurch gekennzeichnet, daß sich die wendelförmige Druckfläche (25) über einen Winkel von etwa 180° bis 270° erstreckt.

18. Beschlag nach wenigstens einem der Ansprüche 3 bis 17, dadurch gekennzeichnet, daß der Anfang (28) der wendelförmigen Druckfläche (25) gegenüber der Keilfläche (18) um etwa 70° bis 110° versetzt ist.

## Claims

1. Fitting for connecting two components (1, 2) particularly two panels or walls of a piece of furniture which are disposed transversely to each other, with a locking member (3) adpated to be connected to the first component (1) and, provided with a push-in aperture (13) and adapted to be connected to the second component, a pull-and-grip device (4) with a rotary member (7) comprising a thrust face (25) for a mating face (29) on the locking member (3) which is directed towards the push-in direction (17), characterised in that the rotary member (7) is spring loaded substantially oppositely to the push-in direction (17) of the locking member (3) and, when viewed in the push-in direction (17), has disposed at a distance behind the beginning (28) of the thrust face (25) and extending in a peripheral direction, a keying surface (18) which, in the starting position, projects into the area of displacement of the locking member (3), leaving this latter after a predetermined angle of rotation which extends in the direction of closure (21) of the rotary member and in that the thrust face (25) of the rotary member (7) is a helical end face which points against the direction of force (6) of the spring loading while being in the starting position outside the area of displacement of the locking member (3), engaging beind the mating surface (29) no later than when the keying surface (18) emerges from the area of displacement of the locking member (3).

2. Fitting according to Claim 1, characterised in that the keying surface (18) is disposed on a projection (32) of the rotary member (7) which protrudes transversely of the axis of rotation (31) of the rotary member (7).

3. Fitting according to Claim 2, characterised in that the rotary member (7) substantially has a circularly cylindrical form with, separated off substantially parallel with its longitudinal axis (31), a portion of cross-sectionally arcuate form, one end face (8) of the cylinder extending at a right-angle to the longitudinal axis while the other end face of the cylinder, at least in its outer portion, is formed as a spiral face (25) which constitutes the thrust face.

4. Fitting according to Claim 3, characterised in that the projection (32) with the keying surface (18) is associated with the end (27) of the spiral thrust face (25).

5. Fitting according to Claim 4, characterised in that the projection (32) has a substantially triangular form, one side of the triangle being at the same time part of the surface of the circularly cylindrical casing (22) of the rotary member.

6. Fitting according to at least one of the preceding Claims, characterised by a central blind bore in the rotary member (7) on the inner end of which is braced one end of a biasing spring (5) which is constructed as a coiled thrust spring.

7. Fitting according to Claim 6, characterised by a stud-like actuating projection (24) on the rotary member (7) with a housing (30) for a rotating tool adapted to rotate in a bearing bore in a member (9) of the pull-and-grip device.

8. Fitting according to Claim 7, characterised in that the fitting member (9) of the pull-and-grip device (4) is of substantially pot-shaped form with, in particular, a radially projecting end (15), a portion of the end being removed to form the push-in aperture (13) for the locking member (3).

9. Fitting according to Claim 8, characterised in that the push-in aperture (13) has substantially the form of a portion of a circle with lateral grooves on the straight boundary of the aperture, at least the push-in end (34) of the locking member being constructed as a flat tongue.

10. Fitting according to Claim 9, characterised in that the mating surface (29) of the locking member (3) is part of a furrow-like depression (35) in the push-in end (34).

11. Fitting according to Claim 10, characterised in that the mating surface (29) is inclined to the plane of the push-in end (34) and extends at an angle to the free front edge (19) of the latter which is substantially at a right-angle to the push-in direction (17).

12. Fitting according to at least one of Claims 9 to 11, characterised in that the locking member (3) consists essentially of a self-tapping stud (36) and a plate-like part (38) disposed at a right-angle to its longitudinal axis.

13. Fitting according to at least one of Claims 9 to 12, characterised in that the other end of the biasing spring (5) which is remote from the rotary member (7) is fixed on a cover (39) of the fitting member (9) of the push-and-grip device which is fitted on the edge of the pot-shaped member.

14. Fitting according to Claim 13, characterised in that the cover (39) which is in particular made from synthetic plastics material is retained on the body (9) of the fitting by a clamping or catch-like engagement.

15. Fitting according to Claim 14, characterised in that the cover (39) is retained in the lateral grooves of the push-in aperture (13) by a strip (41) or two spaced-apart projections.

16. Fitting according to Claim 15, characterised in that the geometrical axis (31) of the rotary member (7) extends at an angle to that of the fitting member (9), the other end of the biasing spring (5) bearing on the strip (41) on the cover (39).

17. Fitting according to at least one of the preceding Claims, characterised in that the spiral thrust face (25) extends over an angle of about 180° to 270°.

18. Fitting according to at least one of Claims 3 to 17, characterised in that the beginning (28) of the spiral thrust face (25) is offset by about 70° to 110° in respect of the keying surface (18).

**Revendications**

1. Ferrure pour solidariser deux éléments constitutifs (1, 2), en particulier deux panneaux ou parois d'un meuble occupant des positions mutuellement perpendiculaires, comprenant une pièce (3) à déclic pouvant être reliée au premier élément constitutif (1) et un dispositif (4) de traction et de retenue qui peut être relié au second élément constitutif et présente un orifice d'emboîtement (13) destiné à ladite pièce, ainsi qu'une pièce tournante (7) munie d'une surface de pression (25) pour une surface complémentaire (29) de la pièce (3) à déclic, tournée sensiblement à l'opposé de la direction d'emboîtement (17), caractérisée par le fait que la pièce tournante (7) est chargée élastiquement, sensiblement à l'opposé de la direction d'emboîtement (17) de la pièce (3) à déclic, et présente une surface cunéiforme (18) qui s'étend dans le sens périphérique, se trouve à distance derrière le début (28) de la surface de pression (25) en considérant la direction d'emboîtement (17), s'engage en position initiale dans la zone de coulissement de la pièce (3) à déclic, et quitte cette zone selon un angle de rotation préétabli, s'étendant dans la direction de fermeture (21) de la pièce tournante ; et par le fait que la surface de pression (25) de la pièce tournante (7) est une surface frontale hélicoïdale qui est tournée à l'opposé de la direction (6) d'application de force de la charge élastique, se trouve en position initiale en dehors de la zone de coulissement de la pièce (3) à déclic, et emprisonne par derrière la surface complémentaire (29) de la pièce à déclic, au plus tard lorsque la surface cunéiforme (18) sort de la zone de coulissement de cette pièce (3) à déclic.

2. Ferrure selon la revendication 1, caractérisée par le fait que la surface cunéiforme (18) se trouve sur un mentonnet (32) de la pièce tournante (7), saillant transversalement par rapport à l'axe de rotation (31) de cette pièce tournante (7).

3. Ferrure selon la revendication 2, caractérisée par le fait que la pièce tournante (7) possède pour l'essentiel une configuration cylindrique droite, avec une région partielle de section en forme de secteur circulaire, séparée à peu près parallèlement à son axe longitudinal (31), l'une (8) des faces extrêmes du cylindre s'étendant perpendiculairement à l'axe longitudinal, et l'autre face extrême du cylindre étant réalisée, au moins dans sa région extérieure, en tant que surface hélicoïdale (25) qui forme la surface de pression.

4. Ferrure selon la revendication 3, caractérisée par le fait que le mentonnet (32) muni de la surface cunéiforme (18) est associé à l'extrémité (27) de la surface hélicoïdale de pression (25).

5. Ferrure selon la revendication 4, caractérisée par le fait que le mentonnet (32) possède une configuration sensiblement triangulaire, un flanc du triangle formant simultanément une surface partielle de l'enveloppe cylindrique droite (22) de la pièce tournante.

6. Ferrure selon au moins l'une des revendications précédentes, caractérisée par un trou borgne central de la pièce tournante (7), contre l'extrémité interne duquel prend appui l'une des extrémités d'un ressort de contrainte (5), réalisé sous la forme d'un ressort hélicoïdal de pression.

7. Ferrure selon la revendication 6, caractérisée par une saillie d'actionnement (24) de la pièce tournante (7), en forme de tenon, avec un logement (30) destiné à un outil de rotation qui peut tourner dans un trou de montage d'un corps d'armature (9) du dispositif (4) de traction et de retenue.

8. Ferrure selon la revendication 7, caractérisée par le fait que le corps d'armature (9) du dispositif (4) de traction et de retenue présente une configuration substantiellement en cuvette, avec un fond (15) de cuvette qui est notamment proéminent dans le sens radial, ce fond de cuvette étant partiellement discontinu afin de former l'orifice d'emboîtement (13) associé à la pièce (3) à déclic.

9. Ferrure selon la revendication 8, caractérisée par le fait que l'orifice d'emboîtement (13) présente sensiblement la forme d'un secteur circulaire avec des rainures latérales sur la délimitation rectiligne de l'orifice, et au moins l'extrémité d'emboîtement (34) de la pièce à déclic est réalisée en tant que languette aplatie.

10. Ferrure selon la revendication 9, caractérisée par le fait que la surface complémentaire (29) de la pièce (3) à déclic constitue une partie d'un renfoncement (35), du type moulure, de l'extrémité d'emboîtement (34).

11. Ferrure selon la revendication 10, caractérisée par le fait que la surface complémentaire (29) s'étend à l'oblique par rapport au plan de l'extrémité d'emboîtement (34), et à l'oblique par rapport à l'arête frontale antérieure libre (19) de cette dernière, qui se dresse à peu près perpendiculairement à la direction d'emboîtement (17).

12. Ferrure selon au moins l'une des revendications 9 à 11, caractérisée par le fait que la pièce (3) à déclic se compose, pour l'essentiel, d'une cheville autotaraudeuse (36) et d'une partie (38) en forme de plaquette, disposée perpendiculairement à l'axe longitudinal de ladite cheville.

13. Ferrure selon au moins l'une des revendications 9 à 12, caractérisée par le fait que l'autre extrémité du ressort de contrainte (5), tournée à l'opposé de la pièce tournante (7), prend appui contre un couvercle (39) du corps d'armature (9) du dispositif de traction et de retenue, qui est fixé au bord de la cuvette.

14. Ferrure selon la revendication 13, caractérisée par le fait que le couvercle (39), fabriqué notamment en une matière plastique, est retenu par coincement ou par encliquetage sur le corps d'armature (9).

15. Ferrure selon la revendication 14, caractérisée par le fait que le couvercle (39) est retenu, dans les rainures latérales de l'orifice d'emboîtement (13), par un jonc (41) ou par deux appendices situés à distance l'un de l'autre.

16. Ferrure selon la revendication 15, caractérisée par le fait que l'axe géométrique (31) de la pièce tournante (7) s'étend à l'oblique par rapport à celui du corps d'armature (9), et l'autre extrémité du ressort de contrainte (5) prend appui contre le jonc (41) du couvercle (39).

17. Ferrure selon au moins l'une des revendications précédentes, caractérisée par le fait que la surface hélicoïdale de pression (25) s'étend sur un angle d'environ 180° à 270°.

18. Ferrure selon au moins l'une des revendications 3 à 17, caractérisée par le fait que le début (28) de la surface hélicoïdale de pression (25) est décalé d'environ 70° à 110° par rapport à la surface cunéiforme (18).

**EP 0 222 170 B1**

Fig. 1  Fig. 2  Fig. 3

Fig. 4  Fig. 5  Fig. 6

EP 0 222 170 B1

21

18   27        22

                30

32

23

28        31

            7

Fig. 7                    Fig. 8